# EUROPEAN PATENT APPLICATION

(11) **EP 4 789 846 A1**
(43) Date of publication of application: **12.08.2026**
(21) Application number: 24874314.8
(22) Date of filing: 26.06.2024
(51) Int. Cl.: B29C 65/02, B32B 15/08, B32B 37/06

(54) **BONDING METHOD AND BONDED STRUCTURE**

(30) Priority: 03.10.2023 JP 2023172028
(71) Applicant: Nikkiso Co., Ltd., Tokyo 150-6022 (JP)
(72) Inventor: SAITO, Koichiro, Higashimurayama-shi Tokyo 189-8520 (JP)
(74) Representative: Algemeen Octrooi- en Merkenbureau B.V.
(86) International application number: PCT/JP2024/023099
(87) International publication number: WO 2025/074697

(57) **Abstract**

A bonded structure (200) includes: a first member (210) containing a thermoplastic first resin; a second member (220) containing a thermoplastic second resin; and a metal member (230) having a first surface (232) on which a first metal oxide particle cluster (236) to be bonded to the first resin of the first member (210) is formed and a second surface (234) on which a second metal oxide particle cluster (238) to be bonded to the second resin of the second member (220) is formed and having a thickness of 5 µm or more and 1 mm or less from the first surface (232) to the second surface (234).

## Description

### TECHNICAL FIELD

The present inventions relates to a bonding method and a bonded structure.

### BACKGROUND ART

In recent years, structural members in which a fiber-reinforced plastic is used have been adopted to reduce the weight of automobiles and aircraft. For example, fiber-reinforced plastic (FRP) materials are formed by heating and pressure molding a prepreg produced by impregnating a reinforcement fiber with a resin. The FRP materials are bonded to metal materials by, for example, an epoxy adhesive (see, for example, Patent Literature 1).

### RELATED-ART LITERATURE

### PATENT LITERATURE

Patent Literature 1: JP 2022-140091

### SUMMARY OF INVENTION

### TECHNICAL PROBLEM

In the related art described above, there is concern that bonding with an epoxy adhesive may result in a decrease in strength.

The present invention addresses the issue described above, and a purpose thereof is to provide a lightweight and highly rigid bonded structure.

### SOLUTION TO PROBLEM

A bonding method according to one embodiment of the present invention includes: arranging a metal member between a first member containing a thermoplastic first resin and a second member containing a thermoplastic second resin, the metal member having a first surface on which a first metal oxide particle cluster is formed and a second surface on which a second metal oxide particle cluster is formed and having a thickness of 1 mm or less from the first surface to the second surface; and heating and pressurizing the metal member between the first member and the second member so as to bond the first surface to the first resin and bond the second surface to the second resin.

Another embodiment of the present invention relates to a bonded structure. This bonded structure includes: a first member containing a thermoplastic first resin; a second member containing a thermoplastic second resin; and a metal member having a first surface on which a first metal oxide particle cluster to be bonded to the first resin of the first member is formed and a second surface on which a second metal oxide particle cluster to be bonded to the second resin of the second member is formed and having a thickness of 5 µm or more and 1 mm or less from the first surface to the second surface.

### ADVANTAGEOUS EFFECTS OF INVENTION

According to one embodiment of the present invention, a lightweight and highly rigid bonded structure can be provided.

### BRIEF DESCRIPTION OF DRAWINGS

[Fig. 1] Fig. 1 is a cross-sectional view schematically showing the configuration of a bonded structure according to the first embodiment;
[Fig. 2] Figs. 2(a) to 2(c) are diagrams schematically showing a bonding method according to the first embodiment;
[Fig. 3] Fig. 3 is a perspective view schematically showing the configuration of a bonded structure according to the second embodiment;
[Fig. 4] Fig. 4 is a perspective view schematically showing the configuration of a reinforcing member according to the second embodiment;
[Fig. 5] Fig. 5 is a perspective view schematically showing the configuration of the reinforcing member according to the second embodiment;
[Fig. 6] Fig. 6 is a top view schematically showing the configuration of the reinforcing member according to the second embodiment;
[Fig. 7] Fig. 7 is a lateral cross-sectional view schematically showing the configuration of the reinforcing member according to the second embodiment;
[Fig. 8] Fig. 8 is a top view schematically showing the lattice frame shape of an apex portion;
[Fig. 9] Figs. 9(a) and 9(b) are diagrams schematically showing a method of forming a prepreg sheet;
[Fig. 10] Fig. 10 is a diagram schematically showing a method of molding the reinforcing member according to the second embodiment;
[Fig. 11] Figs. 11A and 11B are diagrams schematically showing the orientation direction of the prepreg sheets;
[Fig. 12] Fig. 12 is a top view showing the reinforcing member according to an exemplary embodiment;
[Fig. 13] Fig. 13 is a diagram schematically showing a bonding portion between a main body member and the reinforcing member;
[Fig. 14] Fig. 14 is a top view schematically showing the configuration of a metal member according to the second embodiment;
[Fig. 15] Fig. 15 is a perspective view schematically showing the configuration of a reinforcing member according to an exemplary variation;
[Fig. 16] Fig. 16 is a perspective view schematically showing the configuration of the reinforcing member according to the exemplary variation;
[Fig. 17] Fig. 17 is a diagram schematically showing a method of molding the reinforcing member according to the exemplary variation; and
[Fig. 18] Fig. 18 is a lateral cross-sectional view schematically showing the configuration of a bonded structure according to the third embodiment.

### DESCRIPTION OF EMBODIMENTS

Hereinafter, an embodiment for carrying out the present invention will be described in detail with reference to the accompanying drawing. In the explanation, like numerals represent like constituting elements, and duplicative explanations will be omitted appropriately. To facilitate the understanding, the relative dimensions of the constituting elements in the drawings do not necessarily mirror the actual relative dimensions.

### (First embodiment)

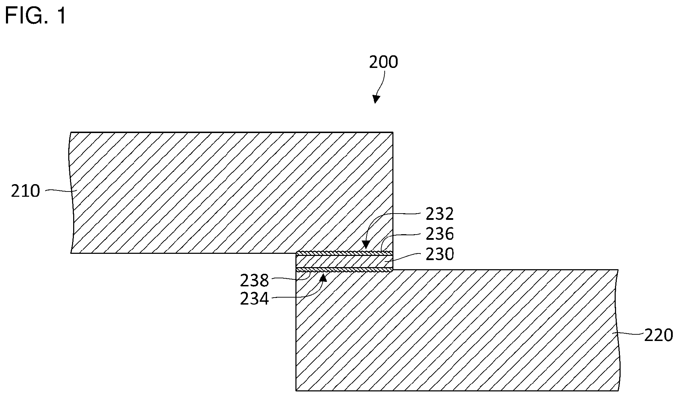

Fig. 1 is a cross-sectional view schematically showing the configuration of a bonded structure 200 according to the first embodiment. The bonded structure 200 includes a first member 210, a second member 220, and a metal member 230. The bonded structure 200 is a structure in which the first member 210 and the second member 220 are bonded by the metal member 230, and the metal member 230 functions as an adhesive or a bonding material.

The first member 210 includes a first resin that is thermoplastic. The first member 210 is a resin material made of the first resin as a whole or a fiber reinforced resin material containing a first reinforcement fiber impregnated with the first resin. The second member 220 includes a second resin that is thermoplastic. The second member 220 is a resin material made of the second resin as a whole or a fiber reinforced resin material containing a second reinforcement fiber impregnated with the second resin. The first resin and the second resin may be the same resin material or different resin materials. In the same manner, the first and second reinforcement fibers may be the same reinforcement fiber material or different reinforcement fiber materials. At least one of the first reinforcement fiber and the second reinforcement fiber may be provided to extend in a direction along a first surface 232 or a second surface 234 of the metal member 230. At least one of the first and second reinforcement fibers may be woven.

At least one of the first and second resins is a thermoplastic engineering plastic, for example, aromatic polyether ketone (PAEK), polyether ether ketone (PEEK), polyether ketone ketone (PEKK), polyphenylene sulfide (PPS), polyetherimide (PEI), or polyether sulfone (PES). At least one of the first and second reinforcement fibers is carbon fiber, glass fiber, or aramid fiber.

The metal member 230 includes a first surface 232 to be bonded to the first member 210 and a second surface 234 to be bonded to the second member 220. The thickness of the metal member 230 from the first surface 232 to the second surface 234 is 5 µm or more and 2 mm or less, for example, 10 µm or more and 1 mm or less, for example, 50 µm or more and 0.5 mm or less. As the metal member 230, for example, steel, aluminum, aluminum alloy, titanium, titanium alloy, nickel-titanium alloy, copper, or copper alloy can be used.

A first metal oxide particle cluster 236 for bonding with the first resin is formed on the first surface 232. A second metal oxide particle cluster 238 for bonding with the second resin is formed on the second surface 234. At least one of the first metal oxide particle cluster 236 and the second metal oxide particle cluster 238 can be formed by heating and modifying the surface of the metal member 230 by laser irradiation or the like. The metal oxide particle clusters are formed of, for example, oxides of metal materials that constitute the metal member 230 before heating. The metal oxide particle clusters are formed when particulate metal oxides, created by the localized melting of metal materials, adhere to the surfaces. The particle size of the metal oxide particle clusters is, for example, 5 nm or more and 500 nm or less, and for example, 50 nm or more and 200 nm or less. The maximum height of the metal oxide particle clusters is, for example, 50 nm or more and 3 µm or less, for example, 100 nm or more and 2µm or less, and for example, 200 nm or more and 1µm or less.

The first metal oxide particle cluster 236 chemically bonds with the first resin contained in the first member 210 and physically bonds with the first resin by the entry of the first resin that has been softened into the irregularities of the particle clusters. By providing the first metal oxide particle cluster 236, the bonding strength between the first member 210 and the metal member 230 can be improved. In the same manner, the second metal oxide particle cluster 238 chemically bonds with the second resin contained in the second member 220 and physically bonds with the second resin by the entry of the second resin that has been softened into the irregularities of the particle clusters. By providing the second metal oxide particle cluster 238, the bonding strength between the second member 220 and the metal member 230 can be improved. The bonding between the first member 210 and the second member 220 through the metal oxide particle clusters allows the bonding strength to be dramatically improved compared to a case where the first resin and the second resin are directly bonded through fusing or are bonded through an epoxy adhesive.

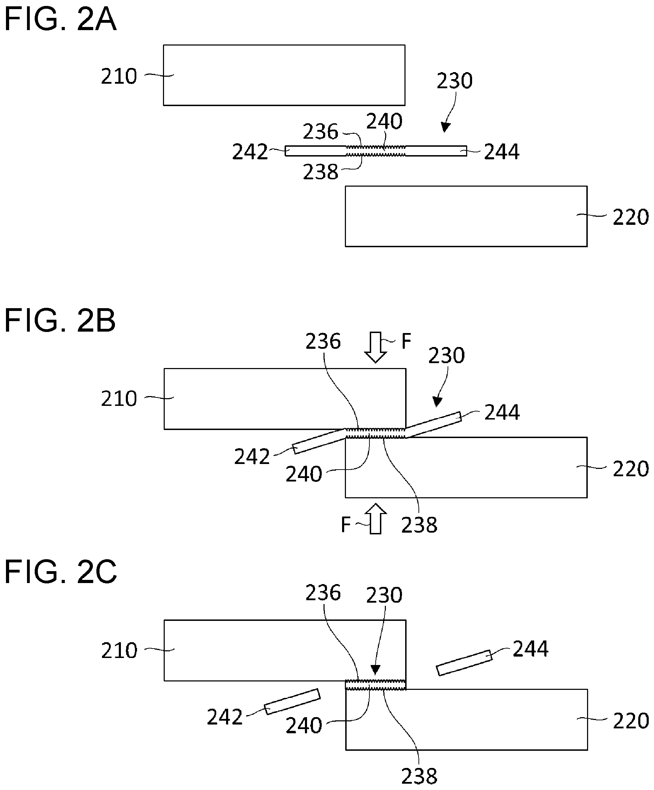

Figs. 2(a) to 2(c) are diagrams schematically showing a bonding method according to the first embodiment. First, a metal member 230 is arranged between the first member 210 and the second member 220 as shown in Fig. 2A. The metal member 230 includes a bonding portion 240, a first extension portion 242, and a second extension portion 244. The bonding portion 240 is a part located between the first member 210 and the second member 220. The first metal oxide particle cluster 236 and the second metal oxide particle cluster 238 are formed on the respective sides of the bonding portion 240.

The first extension portion 242 and the second extension portion 244 are portions that extend and protrude from between the first member 210 and the second member 220. The first extension portion 242 is a portion that extends along the first member 210, for example. The second extension portion 244 is a portion that extends along the second member 220, for example. The first metal oxide particle cluster 236 and the second metal oxide particle cluster 238 do not need to be formed on the respective sides of the first extension portion 242 and the second extension portion 244. In the example shown in Fig. 2(a), the bonding portion 240 is provided between the first extension portion 242 and the second extension portion 244. The metal member 230 may include only one of the first extension portion 242 and the second extension portion 244 and does not need to include the other one. The metal member 230 does not need to include the first extension portion 242 and may include only the bonding portion 240.

Then, as shown in Fig. 2(b), the bonding portion 240 of the metal member 230 is pressurized between the first member 210 and the second member 220 as indicated by an arrow F. Furthermore, the metal member 230 is heated during the pressurization of the metal member 230. The metal member 230 can be heated through irradiation with electromagnetic waves or through the passing of an electric current. For example, at least one of the first extension portion 242 and the second extension portion 244 may be irradiated with electromagnetic waves such as laser light or infrared light. For example, a power supply may be connected to the first extension portion 242 and the second extension portion 244, and an electric current may be passed through the metal member 230 for resistive heating. In addition, a coil may be arranged around at least one of the first extension portion 242 and the second extension portion 244 to apply a high-frequency magnetic field and heat the metal member 230 by high-frequency induction heating, which generates eddy currents in the metal member 230. By heating and pressurizing the metal member 230, the first resin of the first member 210 softens and bonds with the first metal oxide particle cluster 236, and the second resin of the second member 220 softens and bonds with the second metal oxide particle cluster 238.

Then, as shown in Fig. 2(c), the first extension portion 242 and the second extension portion 244 are cut off and removed from the bonding portion 240 bonded between the first member 210 and the second member 220. This is because the first extension portion 242 and the second extension portion 244 are non-bonding portions that do not bond with the first member 210 or the second member 220 and do not contribute to the bonding. This results in forming a bonded structure 200 shown in Fig. 1. Note that the first extension portion 242 and the second extension portion 244 do not need to be removed; at least one of the first extension portion 242 and the second extension portion 244 may remain connected to the bonding portion 240.

The metal member 230 may be preheated before being arranged between the first member 210 and the second member 220.

According to the present embodiment, the bonding strength between the first member 210 and the second member 220 can be improved. Furthermore, by setting the thickness of the metal member 230 to 2 mm or less, preferably 1 mm or less, the increase in weight due to the addition of the metal member 230 can be suppressed. Further, reducing the thickness of the metal member 230 allows the film-like metal member 230 to lie along the surface of the first member 210 or the second member 220, even if the surface of the first member 210 or the second member 220 is curved. Furthermore, when the first member 210 or the second member 220 contains woven reinforcement fibers, it becomes easier to arrange the film-like metal member 230 along minute concavities and convexities caused by stitches of the reinforcement fibers. This can enhance the adhesion between the first member 210 or the second member 220, which is made of fiber-reinforced resin, and the metal member 230, thereby improving the bonding strength.

### (Second embodiment)

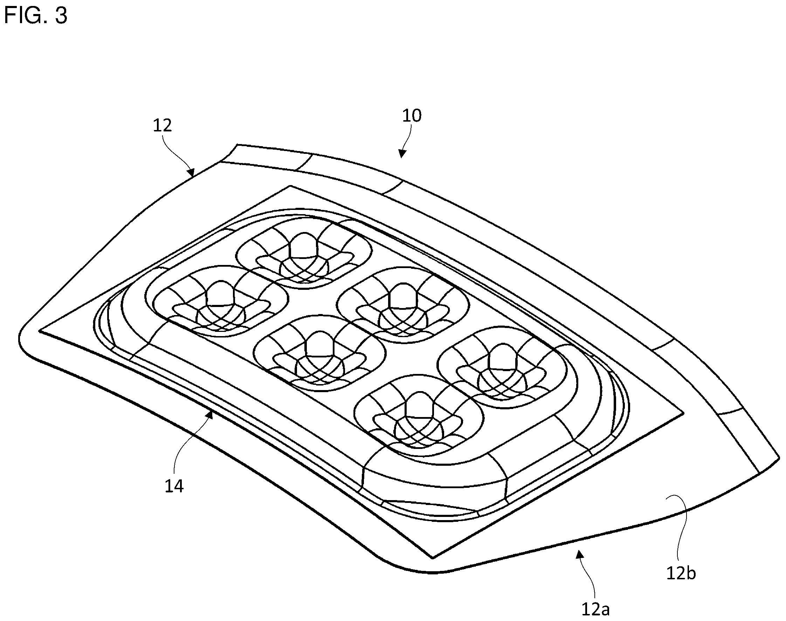

Fig. 3 is a perspective view schematically showing the configuration of a bonded structure 10 according to the second embodiment. The bonded structure 10 is a blocker door attached to the outer circumference of an aircraft engine. The blocker door is a movable member for blocking the bypass airflow of the engine to reverse the thrust. In the embodiment, the bonded structure 10 is exemplified by a blocker door, but the application of the bonded structure 10 according to this embodiment is not particularly limited. A bonded structure 10 according to this embodiment may be applied to a structural member of any shape and application.

The bonded structure 10 includes a main body member 12 and a reinforcing member 14. The main body member 12 is a plate-shaped member and has a front surface 12a that the bypass airflow collides against during reverse thrust and a back surface 12b opposite to the front surface 12a. The main body member 12 has a gently curved shape as a whole. The main body member 12 is a plate-shaped member having a small thickness and so could easily undergo deformation (for example, flexing) due to a load applied to the front surface 12a. The reinforcing member 14 is attached to the back surface 12b of the main body member 12 to suppress deformation (for example, flexing) of the front surface 12a of the main body member 12 and increase the rigidity of the main body member 12. The reinforcing member 14 is a plate-shaped member in which concavities and convexities are formed, and the concave-convex shape suppresses deformation (for example, flexing).

Conventionally, a sandwich panel having a honeycomb core is used as a lightweight and highly rigid structural member. Since a honeycomb core is made of an expensive material and is not easy to process into a desired shape, the processing cost thereof is high. In this embodiment, the main body member 12 and the reinforcing member 14 are made of a fiber-reinforced resin (FRP; Fiber Reinforced Plastics), and the reinforcing member 14 is bonded to the main body member 12, thereby realizing a lightweight and highly rigid bonded structure 10 without using a honeycomb core. The main body member 12 and the reinforcing member 14 are bonded, for example, by a metal member (not shown in Fig. 3) having a metal oxide particle cluster formed on the surface thereof, in the same way as in the first embodiment.

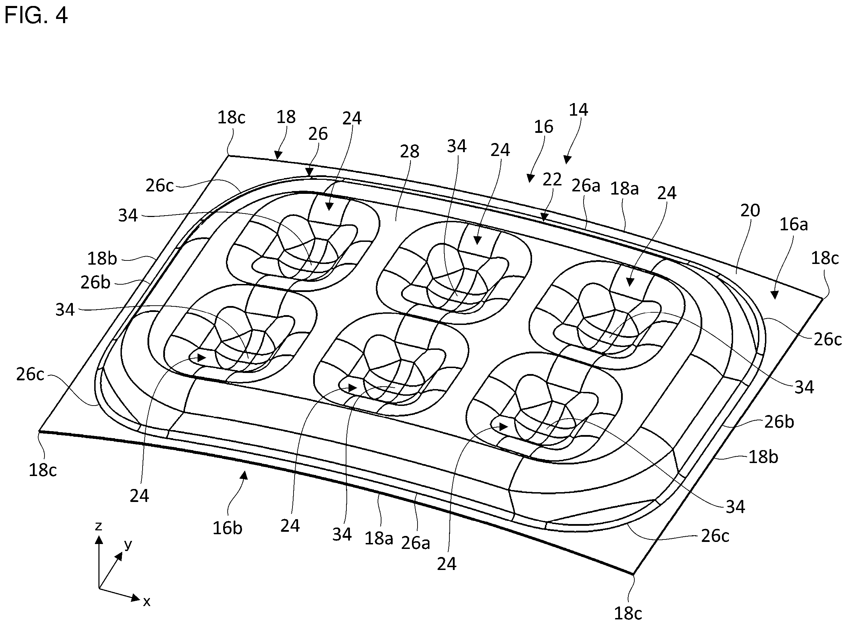

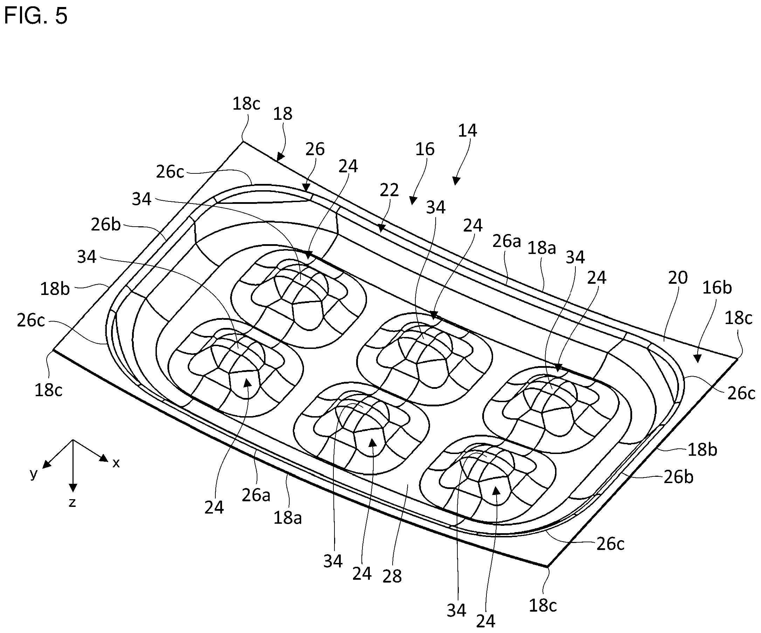

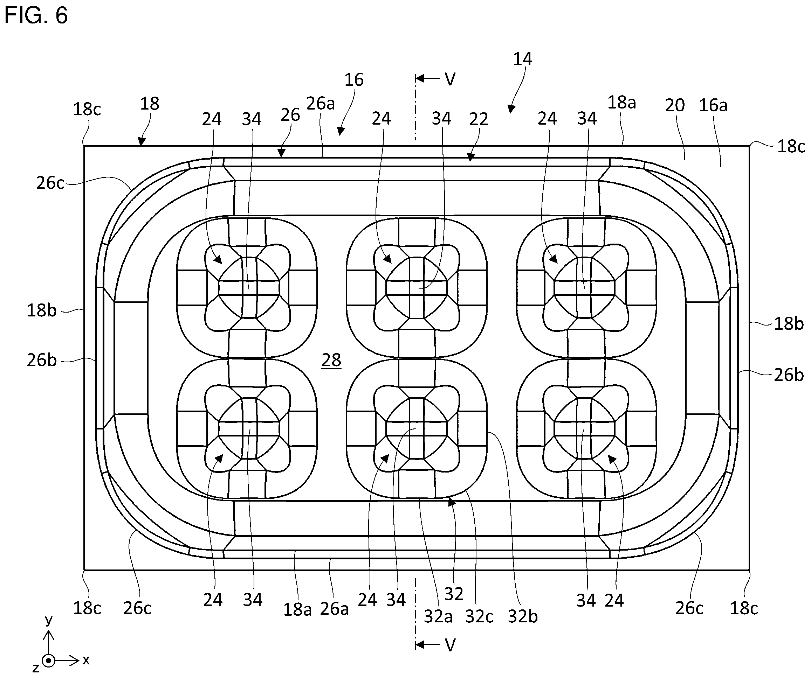

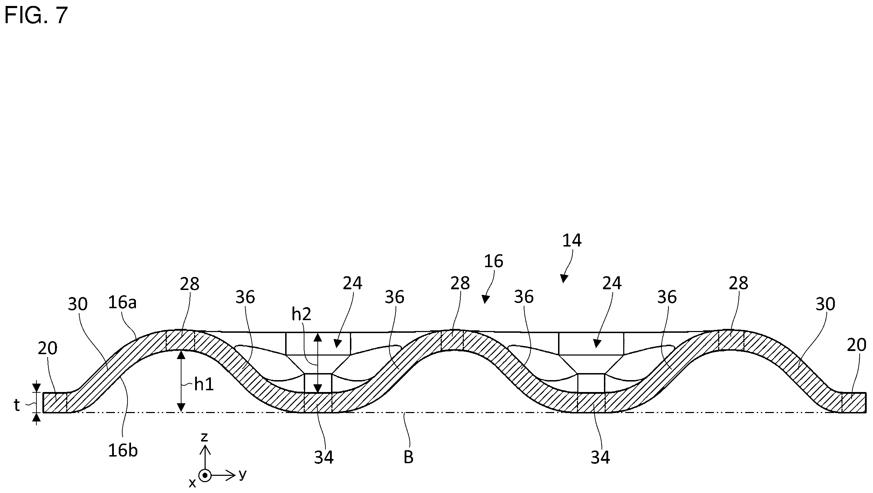

Figs. 4 to 7 are diagrams schematically showing the configuration of the reinforcing member 14 according to the second embodiment. The reinforcing member 14 is formed by a plate-shaped member 16 in which concavities and convexities are formed. The plate-shaped member 16 has a first surface 16a and a second surface 16b opposite to the first surface 16a. Fig. 4 is a perspective view of the first surface 16a, and Fig. 5 is a perspective view of the second surface 16b. Fig. 6 is a top view of the first surface 16a. Fig. 7 is a lateral cross-sectional view corresponding to the V-V cross-section of Fig. 6.

In the drawings, the thickness direction of the reinforcing member 14 is defined as the z direction, the longitudinal direction of the reinforcing member 14 is defined as the x direction, and the direction orthogonal to the x direction and the z direction is defined as the y direction. These directions are set to help understand the embodiment and do not limit the directions during manufacturing or use of the bonded structure 10 or the reinforcing member 14. In addition, inflections of the concave-convex shape are denoted in the drawings by solids line so as to illustrate the concave-convex shape in an easy-to-understand manner.

The shape of the outer edge 18 of the plate-shaped member 16 is, for example, a quadrangle and is, for example, a rectangle. The outer edge 18 of the plate-shaped member 16 has a long side 18a extending in the longitudinal direction (for example, the x direction), a short side 18b extending in a direction that intersects the longitudinal direction (for example, the y direction), and a corner portion 18c provided between the long side 18a and the short side 18b. The shape of the outer edge 18 of the plate-shaped member 16 is not particularly limited and may be a trapezoid, a rhombus, or a parallelogram, or any polygon like a triangle, a pentagon, or a hexagon. The corner portions 18c of the plate-shaped member 16 may be cut. The corner portion 18c may be cut in a straight line or may be cut in an arc shape.

The plate-shaped member 16 is configured to have a uniform thickness t (see Fig. 7) as a whole. The thickness t of the plate-shaped member 16 is not particularly limited but is, for example, 0.5 mm or more and 10 mm or less and is, preferably, 1 mm or more and 5 mm or less.

The plate-shaped member 16 includes an outer circumferential portion 20, a convex portion 22, and a plurality of concave portions 24.

The outer circumferential portion 20 is a portion that defines the outer edge 18 of the plate-shaped member 16. The outer circumferential portion 20 has a frame shape or a closed loop shape aligned with the outer edge 18 of the plate-shaped member 16. The outer circumferential portion 20 is a portion that has less shape change in the thickness direction than the convex portion 22 and the plurality of concave portions 24. The outer circumferential portion 20 is a portion bonded to the back surface 12b of the main body member 12 and has a shape aligned with the back surface 12b of the main body member 12. In the case the back surface 12b of the main body member 12 has a gently curved shape, the outer circumferential portion 20 has a gently curved shape as a whole. In the case the back surface 12b of the main body member 12 is flat, the outer circumferential portion 20 has a flat shape as a whole.

The convex portion 22 is formed inside the outer circumferential portion 20. The convex portion 22 is formed in an area inside an area in which the outer circumferential portion 20 is formed in a planar view of the first surface 16a (see Fig. 6). The convex portion 22 is a portion that protrudes in the thickness direction with respect to the outer circumferential portion 20. The convex portion 22 is formed such that it protrudes on the side of the first surface 16a and that the first surface 16a is convex and the second surface 16b is concave. The convex portion 22 is, for example, formed to occupy a major portion of the plate-shaped member 16. The area S1 surrounded by the outer edge 26 of the convex portion 22 is 50% or more and is, preferably, 70% or more or 80% or more of the area S surrounded by the outer edge 18 of the plate-shaped member 16.

The outer edge 26 of the convex portion 22 includes a first section 26a extending in the longitudinal direction (for example, the x direction) along the long side 18a, a second section 26b extending in a direction that intersects the longitudinal direction (for example, the y direction) along the short side 18b, and a third section 26c extending in an arc shape between the first section 26a and the second section 26b. The radius of curvature of the third section 26c is larger than the radius of curvature of the corner portion 18c of the plate-shaped member 16. In the illustrated example, the outer edge 26 of the convex portion 22 has a shape in which the four corners of the quadrangle are arc-shaped.

An apex portion 28 of the convex portion 22 is configured such that the height h1 in the thickness direction from the outer circumferential portion 20 (see Fig. 7) is constant. In the case the outer circumferential portion 20 is flat, the apex portion 28 is also configured to be flat. In the case the outer circumferential portion 20 is gently curved, the apex portion 28 is also configured to be gently curved. The height h1 in the thickness direction from the outer circumferential portion 20 to the apex portion 28 is preferably 50 mm or less and is, more preferably 30 mm or less. The height h1 in the thickness direction from the outer circumferential portion 20 to the apex portion 28 is preferably larger than the thickness t of the plate-shaped member 16 and is, for example, 5 mm or more, or, for example, 10 mm or more.

An outer sloped portion 30 (see Fig. 7) is provided between the outer circumferential portion 20 and the apex portion 28. The outer sloped portion 30 is formed such that the height increases monotonically from the outer circumferential portion 20 toward the apex portion 28. Preferably, the outer sloped portion 30 is formed such that the slope does not change abruptly from the outer circumferential portion 20 toward the apex portion 28 and is formed only by a smooth curved surface. The outer sloped portion 30 is formed by, for example, a smooth curve having a radius of curvature of 20 mm or more or 30 mm or more in a cross-sectional view orthogonal to the outer edge 18 of the plate-shaped member 16.

The plurality of concave portions 24 are formed inside the convex portion 22. The plurality of concave portions 24 are formed in an area inside than the outer edge 26 of the convex portion 22 in a planar view of the first surface 16a (see Fig. 6). The plurality of concave portions 24 are, for example, formed in an area inside the outer edge of the apex portion 28 in the planar view of the first surface 16a (see Fig. 6). The plurality of concave portions 24 are formed so as to be concave in the thickness direction with respect to the apex portion 28. The plurality of concave portions 24 are formed such that they protrude on the side of the second surface 16b side, the first surface 16a is concave, and the second surface 16b is convex. The plurality of concave portions 24 are arranged in a lattice shape in the apex portion 28. The plurality of concave portions 24 are arranged in the longitudinal direction (for example, the x direction) of the plate-shaped member 16 and are also arranged in a direction that intersects the longitudinal direction (for example, the y direction). The plurality of concave portions 24 may be arranged in a radial shape in the apex portion 28.

The outer edge 32 (see Fig. 6) of each of the plurality of concave portions 24 includes a first section 32a extending in the longitudinal direction (for example, the x direction) along the long side 18a, a second section 32b extending in a direction that intersects the longitudinal direction (for example, the y direction) along the short side 18b, and a third section 32c extending in an arc shape between the first section 32a and the second section 32b. The radius of curvature of the third section 32c is larger than the radius of curvature of the corner portion 18c of the plate-shaped member 16. In the illustrated example, the outer edge 32 of the concave portion 24 has a shape in which the four corners of the quadrangle are arc-shaped. The size of the outer edge 32 of each of the plurality of concave portions 24 in the longitudinal direction (for example, the x direction) is about the same as the size in a direction that intersects the longitudinal direction (for example, the y direction). That is, the length of the first section 32a is about the same as the length of the second section 32b and is, for example, about 0.8 times-1.2 times the length of the second section 32b.

A bottom portion 34 of each of the plurality of concave portions 24 is a portion bonded to the back surface 12b of the main body member 12. The bottom portion 34 is configured such that the depth h2 (see Fig. 7) in the thickness direction from the apex portion 28 is constant. In the case the outer circumferential portion 20 is flat, the bottom portion 34 of each of the plurality of concave portions 24 is configured to be located on a virtual plane B (see Fig. 7) defined by the outer circumferential portion 20. In the case the outer circumferential portion 20 is gently curved, the bottom portion 34 of each of the plurality of concave portions 24 is configured to be located on a curved surface defined by the outer circumferential portion 20. The height h2 in the thickness direction from the apex portion 28 to the bottom portion 34 is preferably 50 mm or less and is, more preferably, 30 mm or less. The height h2 in the thickness direction from the apex portion 28 to the bottom portion 34 is, for example, 5 mm or more and is, for example, 10 mm or more.

The bottom portion 34 of each of the plurality of concave portions 24 has a shape of a quadrangle or a shape produced by rounding the four corners of a quadrangle. By shaping the bottom portion 34 in a square or in a shape approximating a square, the area occupied by the bottom portion 34 is increased as compared to the case where the bottom portion 34 is circular. This increases the area of bonding between the main body member 12 and the apex portion and increases the bonding strength of the main body member 12 and the reinforcing member 14.

An inner sloped portion 36 (see Fig. 7) is provided between the apex portion 28 and the bottom portion 34. The inner sloped portion 36 is formed such that the height increases monotonically from the bottom portion 34 toward the apex portion 28. Preferably, the inner sloped portion 36 is formed such that the slope does not change abruptly from the bottom portion 34 toward the apex portion 28 and is formed only by a smooth curved surface. The inner sloped portion 36 is configured by, for example, a smooth curve having a radius of curvature of 20 mm or more or 30 mm or more in a cross-sectional view orthogonal to the outer edge 18 of the plate-shaped member 16.

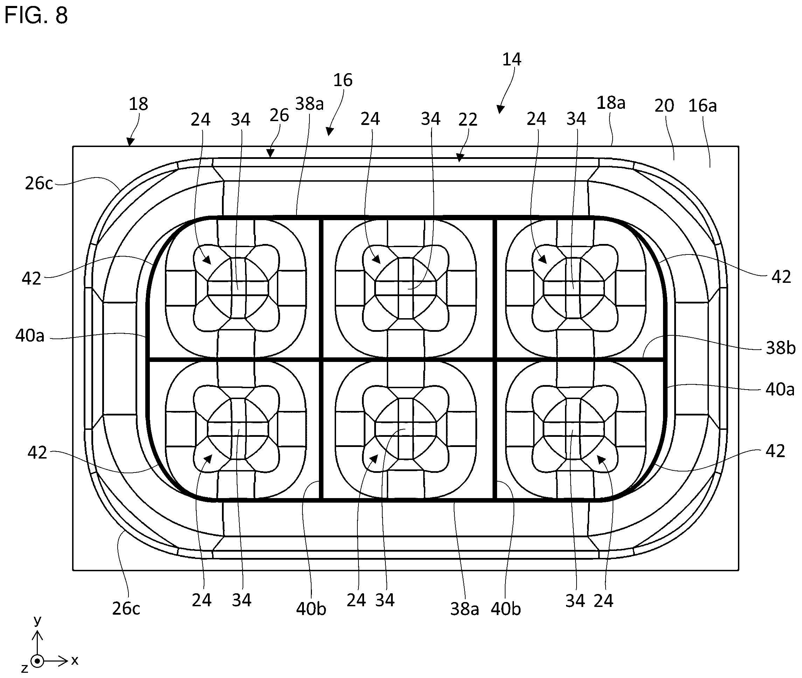

By arranging the plurality of concave portions 24 in a lattice shape, the apex portion 28 has a lattice frame shape that surrounds the outer edge 32 of the plurality of concave portions 24. Fig. 8 is a top view schematically showing the lattice frame shape of the apex portion 28, and the lattice frame shape of the apex portion 28 is schematically shown by a thick line. The apex portion 28 includes a plurality of first beams 38a and 38b extending in the longitudinal direction (for example, the x direction), a plurality of second beams 40a, 40b extending in a direction that intersects the longitudinal direction (for example, the y direction), and a plurality of corner portions 42 extending in an arc shape. The plurality of first beams 38a and 38b include an outer first beam 38a located outside the plurality of concave portions 24 and an inner first beam 38b located between the plurality of concave portions 24. The plurality of second beams 40a and 40b include an outer second beam 40a located outside the plurality of concave portions 24 and an inner second beam 40b located between the plurality of concave portions 24. The outer first beam 38a and the outer second beam 40a are connected by the corner portion 42 extending in an arc shape. The ends of the inner first beam 38b are connected to the outer second beam 40a. The ends of the inner second beam 40b are connected to the outer first beam 38a. The lattice frame shape of the apex portion 28 formed by the first beams 38a and 38b, the second beams 40a and 40b, and the corner portions 42 makes it possible to address load changes in both the longitudinal direction (for example, the x direction) and a direction that intersects the longitudinal direction (for example, the y direction).

The reinforcing member 14 is made of a fiber-reinforced resin and is made of, for example, a thermoplastic fiber-reinforced resin. The reinforcing member 14 is formed by heating and pressurizing, using a mold, a prepreg sheet formed by impregnating the reinforcement fiber with a resin. Carbon fiber, glass fiber or aramid fiber may be used as the reinforcement fiber. The reinforcement fiber is preferably a continuous fiber without a bonded or cut part, and it is preferable to use a reinforcement fiber that extends continuously along the concave-convex shape of the plate-shaped member 16. Engineering plastics such as polyetheretherketone (PEEK) and polyetherketone ketone (PEKK) may be used as the thermoplastic resin with which the reinforcement fiber is impregnated. The main body member 12 may also be made of the same fiber-reinforced resin as the reinforcing member 14 and may be made of the same thermoplastic fiber-reinforced resin as that of the reinforcing member 14. The main body member 12 or the reinforcing member 14 may be made of a thermosetting fiber-reinforced resin. In this case, an epoxy resin or the like may be used as the thermosetting resin with which the reinforcement fiber is impregnated.

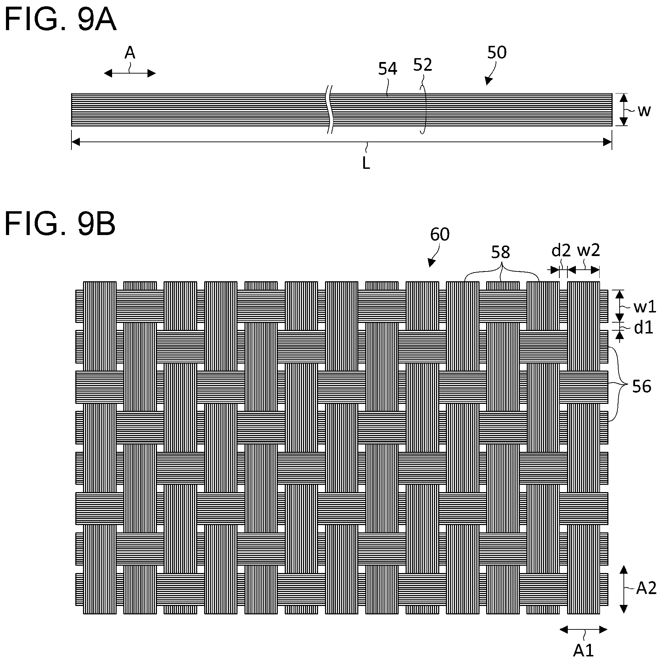

Figs. 9(a) and 9(b) schematically show a method of forming a prepreg sheet. Fig. 9(a) shows a prepreg tape 50 used to form a prepreg sheet. The prepreg tape 50 is comprised of a plurality of reinforcement fibers 52 oriented in one direction and impregnated with a thermoplastic resin 54. The plurality of reinforcement fibers 52 are oriented so as to extend in the longitudinal direction A of the prepreg tape 50. The thermoplastic resin 54 fills the gap between the plurality of reinforcement fibers 52 and fixes a fiber bundle composed of a plurality of reinforcement fibers 52 such that the relative positions of the plurality of reinforcement fibers 52 do not change. The width w of the prepreg tape 50 is not particularly limited and is, for example, 1 mm or more and 20 mm or less and is, for example, 2 mm or more and 10 mm or less. The length L of the prepreg tape 50 is larger than the outer size of the reinforcing member 14 and is, for example, 0.5 m or more or 1 m or more. The thickness of the prepreg tape 50 is, for example, 0.1 mm or more and 2 mm or less and is, for example, 0.2 mm or more and 1 mm or less.

Fig. 9(b) shows a prepreg sheet 60 formed by using the prepreg tape 50. The prepreg sheet 60 is formed by weaving a plurality of first prepreg tapes 56 extending in a first direction A1 and a plurality of second prepreg tapes 58 extending in a second direction A2 that intersects the first direction A1. Each of the first prepreg tape 56 and the second prepreg tape 58 is configured in the same manner as the prepreg tape 50 shown in Fig. 9(a). In the prepreg sheet 60 shown in Fig. 9(b), the first direction A1 and the second direction A2 are orthogonal. That is, given that the first direction A1 is the 0-degree direction, the second direction A2 is the 90-degree direction.

There is a first gap d1 between the plurality of first prepreg tapes 56. The first gap d1 is smaller than the width w1 of the first prepreg tape 56. The first gap d1 is, for example, 1% or more and 50% or less of the width w1 of the first prepreg tape 56 and is, preferably, 5% or more and 25% or less. Similarly, there is a second gap d2 between the plurality of second prepreg tapes 58. The second gap d2 is smaller than the width w2 of the second prepreg tape 58. The second gap d2 is, for example, 1% or more and 50% or less and is, preferably, 5% or more and 25% or less of the width w2 of the second prepreg tape 58. The width w1 of the first prepreg tape 56 may be the same as or different from the width w2 of the second prepreg tape 58. The first gap d1 may be the same as or different from the second gap d2.

The prepreg sheet 60 is not fixed in an area between the first prepreg tape 56 and the second prepreg tape 58 intersecting each other. Therefore, the plurality of first prepreg tapes 56 are configured such that they are displaceable with respect to each other and the first gap d1 is variable in the second direction A2. Similarly, the plurality of second prepreg tapes 58 are configured such that they are displaceable with respect to each other and the second gap d2 is variable in the first direction A1.

The resin weight content (wt%) of the prepreg sheet 60 is 50% or less and is, for example, 40% or less, 35% or less, 30% or less, or 25% or less. By lowering the resin weight content of the prepreg sheet 60, the rigidity of the reinforcing member 14 is increased. The resin weight content (wt%) of the prepreg tape 50 forming the prepreg sheet 60 may be equivalent to the resin weight content of the prepreg sheet 60 and is 50% or less and may be, for example, 40% or less, 35% or less, 30% or less, or 25% or less.

In the prepreg sheet 60 shown in Fig. 9(b), the first prepreg tape 56 and the second prepreg tape 58 are woven in twill weave. The method of weaving the prepreg sheet is not limited to twill weave, and a prepreg sheet may be formed by using any desirable weaving method such as plain weave or sateen weave. Further, the prepreg sheet may be woven by using prepreg tapes extending in three or more directions. For example, the prepreg sheet may be woven by a plurality of first prepreg tapes extending in a first direction (for example, the 0-degree direction), a plurality of second prepreg tapes extending in a second direction (for example, the +60-degree direction) that intersects the first direction, and a plurality of third prepreg tapes extending in a third direction (for example, the -60-degree direction) that intersects the first and second directions.

The prepreg sheet may be woven without using a prepreg tape produced by impregnating a unidirectional fiber with a resin. The prepreg sheet may be formed by, for example, impregnating the entire continuous fiber sheet woven by using continuous fibers with a thermoplastic resin. For example, a plurality of first continuous fibers extending in a first direction (for example, the 0-degree direction) and a plurality of second continuous fibers extending in a second direction (for example, the 90-degree direction) that intersects the first direction may be woven in plain weave, twill weave, sateen weave, or the like to form a continuous fiber sheet. The prepreg sheet may be formed by impregnating such a continuous fiber sheet with a thermoplastic resin. In this case, the prepreg sheet is fixed by a resin in an area between the first and second continuous fibers intersecting each other.

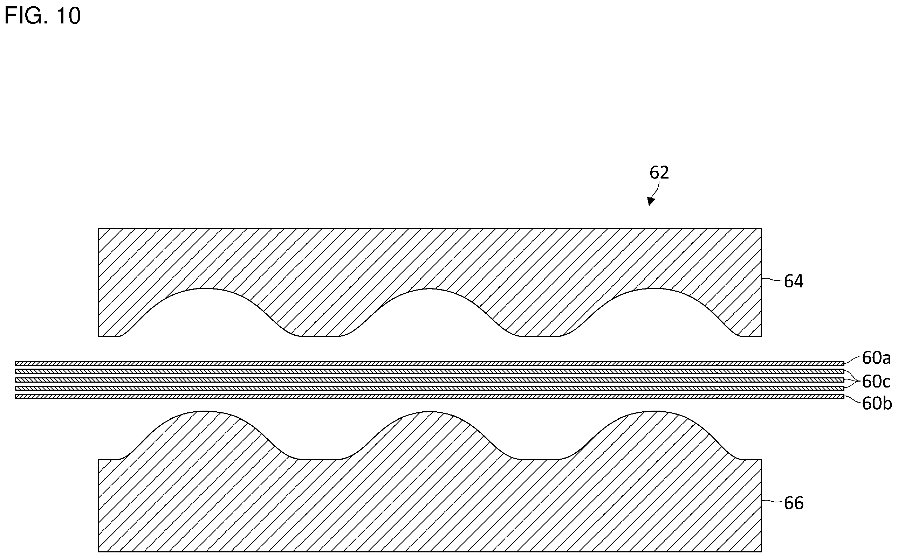

Fig. 10 is a diagram schematically showing a method of molding the reinforcing member 14 according to the second embodiment. A mold 62 for forming the reinforcing member 14 is prepared, and a plurality of prepreg sheets 60a, 60b, and 60c are stacked and arranged between an upper mold 64 and a lower mold 66 of the mold 62. The upper mold 64 has a concave-convex shape corresponding to the first surface 16a of the plate-shaped member 16, and the lower mold 66 has a concave-convex shape corresponding to the second surface 16b of the plate-shaped member 16. The relative positions of the upper mold 64 and the lower mold 66 in the vertical direction does not matter, and they may be used upside down.

Each of the plurality of prepreg sheets 60a-60c is configured in the same manner as the prepreg sheet 60 shown in Fig. 9(b). The plurality of prepreg sheets 60a-60c include a first prepreg sheet 60a, a second prepreg sheet 60b, and intermediate prepreg sheets 60c. The first prepreg sheet 60a is a sheet in contact with the upper mold 64 and constitutes the first surface 16a of the plate-shaped member 16. The second prepreg sheet 60b is a sheet in contact with the lower mold 66 and constitutes the second surface 16b of the plate-shaped member 16. The intermediate prepreg sheets 60c are disposed between the first prepreg sheet 60a and the second prepreg sheet 60b. In the example of Fig. 10, five prepreg sheets are stacked, and one first prepreg sheet 60a, one second prepreg sheet 60b, and three intermediate prepreg sheets 60c are stacked. The number of layers of the prepreg sheet is not particularly limited and may be four or less or six or less. The number of layers of the prepreg sheet may be appropriately set according to the thickness of the prepreg sheet and the thickness t of the reinforcing member 14 to be molded.

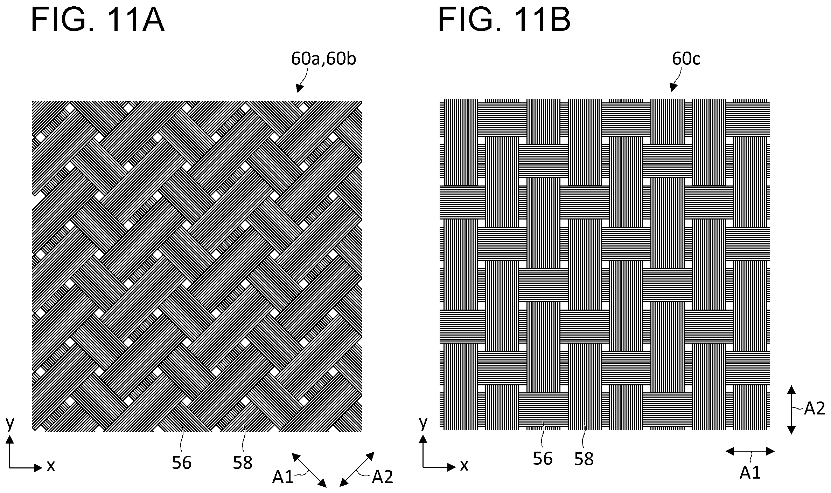

The plurality of prepreg sheets 60a-60c may be arranged such that the orientation directions of the prepreg tapes constituting the prepreg sheets 60a-60c differ from each other. Figs. 11A and 11B are diagrams schematically showing the orientation direction of the prepreg sheets 60a-60c. Fig. 11A shows the orientation directions of the first prepreg sheet 60a and the second prepreg sheet 60b. In the first prepreg sheet 60a and the second prepreg sheet 60b, the orientation directions A1 and A2 of the first prepreg tape 56 and the second prepreg tape 58 are oriented at 45 degrees with respect to the longitudinal direction (for example, the x direction) of the reinforcing member 14. Fig. 11B shows the orientation direction of the intermediate prepreg sheet 60c. In the intermediate prepreg sheet 60c, the orientation direction A1 of the first prepreg tape 56 coincides with the longitudinal direction (for example, the x direction) of the reinforcing member 14. Therefore, the orientation directions A1 and A2 of the intermediate prepreg sheet 60c are rotated 45 degrees with respect to the orientation directions A1 and A2 of the first prepreg sheet 60a and the second prepreg sheet 60b.

The plate-shaped member 16 is molded by heating and pressurizing the plurality of prepreg sheets 60a-60c between the upper mold 64 and the lower mold 66 shown in Fig. 10. The plurality of prepreg sheets 60a-60c of Fig. 10 are heated to a temperature equal to or higher than the melting point of the thermoplastic resin 54 by the upper mold 64 and the lower mold 66 equipped with a heater. The plurality of prepreg sheets 60a-60c are integrated by heating and pressurization by the mold 62 and are molded into the plate-shaped member 16. Thereafter, the plate-shaped member 16 is completed by removing the plate-shaped member 16 from the mold 62. After the molding by the mold 62, parts that are unnecessary in the reinforcing member 14 may be cut from the plate-shaped member 16, or the first surface 16a or the second surface 16b of the plate-shaped member 16 may be polished.

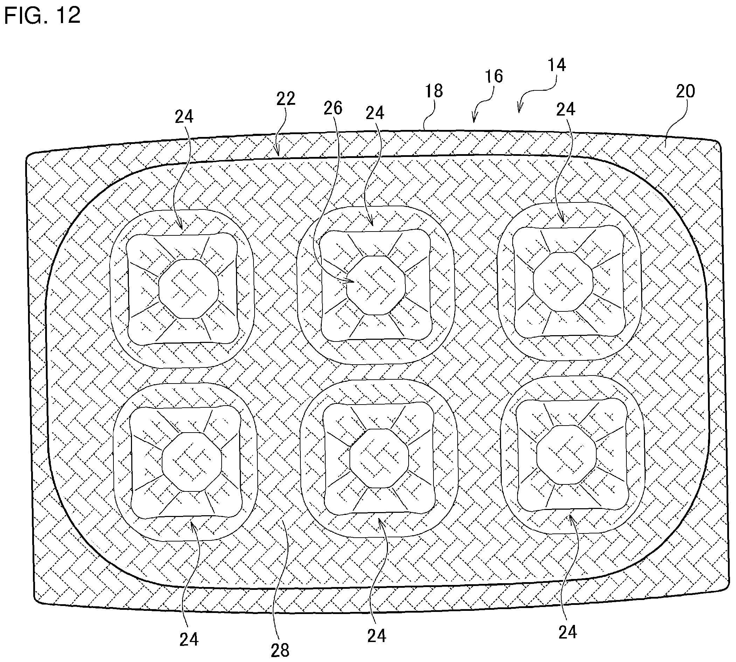

Fig. 12 is a top view showing the reinforcing member 14 according to the embodiment. Fig. 12 shows a case of the reinforcing member 14 where carbon fiber is used as the reinforcement fiber, PEEK is used as the thermoplastic resin, and the prepreg sheets 60a, 60b, and 60c shown in Figs. 11A and 11B are used. As shown in Fig. 12, it can be seen that the plate-shaped member 16 having a complex concave-convex shape including the convex portion 22 and the plurality of concave portions 24 is formed. In particular, there are almost no misaligned stitches of the prepreg tape extending in the ±45-degree directions over the entire plate-shaped member 16 so that the reinforcing member 14 has high rigidity over the entire plate-shaped member 16. Further, it can be seen that the bottom portion 34 of each of the plurality of concave portions 24 has a shape close to a quadrangle.

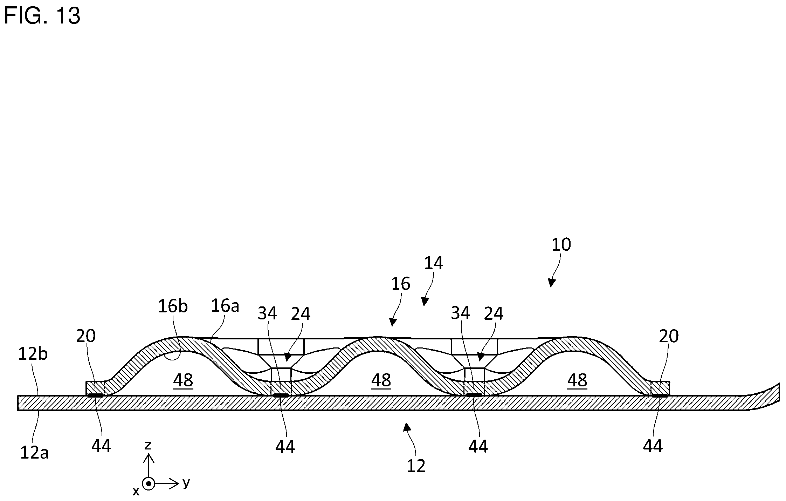

Fig. 13 schematically shows a bonding portion 44 between the main body member 12 and the reinforcing member 14. The reinforcing member 14 is bonded to the back surface 12b of the main body member 12. The reinforcing member 14 is bonded to the main body member 12 by a plurality of bonding portions 44. The plurality of bonding portions 44 are provided between the back surface 12b of the main body member 12 and the second surface 16b of the reinforcing member 14. The plurality of bonding portions 44 are provided on the outer circumferential portion 20 and the bottom portion 34 of the reinforcing member 14. A cavity 48 is provided between the main body member 12 and the reinforcing member 14. The main body member 12, the reinforcing member 14, and the plurality of bonding portions 44 correspond to the first member 210, the second member 220, and the metal member 230 according to the first embodiment.

Each of the plurality of bonding portions 44 may be configured in the same way as in the metal member 230 according to the first embodiment. The plurality of bonding portions 44 include a first surface bonding to the main body member 12 and a second surface bonding to the reinforcing member 14; the space between the first and second surfaces being composed of a metal material, and metal oxide particle clusters are formed on the first and second surfaces. The metal oxide particle clusters in the plurality of bonding portions 44 chemically and physically bond to the thermoplastic resin contained in the main body member 12 or the reinforcing member 14. The plurality of bonding portions 44 can be formed, for example, by arranging a metal member between the main body member 12 and the reinforcing member 14 and then heating and pressurizing the metal member between the main body member 12 and the reinforcing member 14.

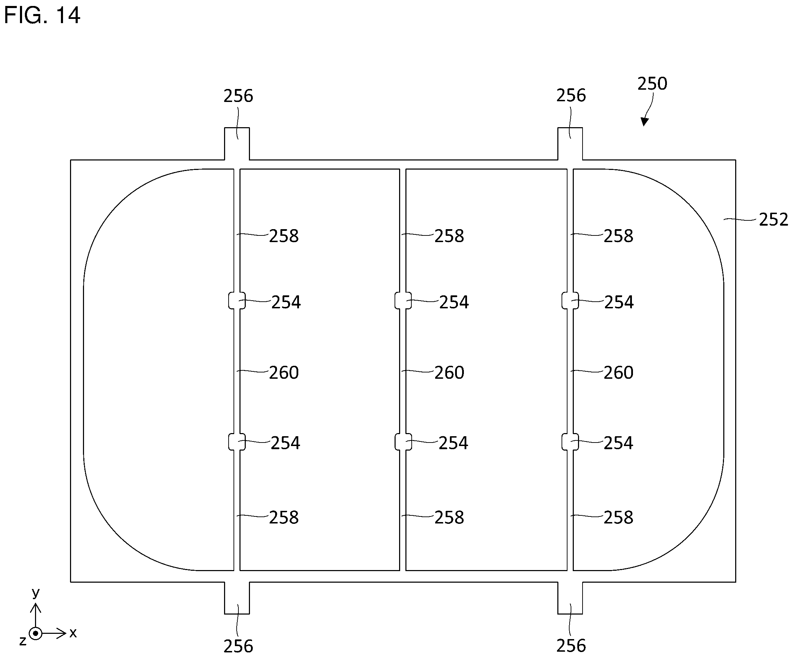

Fig. 14 is a top view schematically showing the configuration of a metal member 250 according to the second embodiment. The metal member 250 includes an outer circumferential bonding portion 252, an inner bonding portion 254, an extension portion 256, a first connecting portion 258, and a second connecting portion 260.

The outer circumferential bonding portion 252 is a portion to be bonded to the outer circumferential portion 20 of the reinforcing member 14. The outer circumferential bonding portion 252 can have a shape similar to that of the outer circumferential portion 20 of the reinforcing member 14. The inner bonding portion 254 is a portion to be bonded to the bottom portion 34 of the concave portion 24 of the reinforcing member 14.

The extension portion 256 is a portion extending outward from the outer edge 18 of the reinforcing member 14 and is a non-bonding portion that is not bonded to the reinforcing member 14. In the example of Fig. 14, the extension portion 256 is provided extending in the y direction; however, the direction in which the extension portion 256 extends is not limited, and the extension portion 256 may extend in the x direction or extend obliquely with respect to the x direction or y direction.

The first connecting portion 258 is a portion connecting the outer circumferential bonding portion 252 and the inner bonding portion 254 and is a non-bonding portion that is not bonded to the reinforcing member 14. The second connecting portion 260 is a portion connecting two adjacent inner bonding portions 254 and is a non-bonding portion that is not bonded to the reinforcing member 14. In the example of Fig. 14, the first connecting portion 258 and the second connecting portion 260 extend in the y direction. However, the direction in which the first connecting portion 258 and the second connecting portion 260 extend is not limited; the first connecting portion 258 and the second connecting portion 260 may extend in the x direction or extend obliquely with respect to the x direction or y direction. The metal member 250 may include two or more of: a connecting member extending in the x direction; a connecting member extending in the y direction; and a connecting member extending obliquely with respect to the x direction or the y direction.

Metal oxide particle clusters are formed on both surfaces of the outer circumferential bonding portion 252 and the inner bonding portion 254. On the other hand, the metal oxide particle clusters do not have to be formed on both surfaces of the extension portion 256, the first connecting portion 258, and the second connecting portion 260. The metal member 250 does not have to include at least one of the extension portion 256, the first connecting portion 258, and the second connecting portion 260. For example, while including the first connecting portion 258, the metal member 250 does not have to include the second connecting portion 260. The metal member 250 may include at least one of the first connecting portion 258 and the second connecting portion 260 without including the extension portion 256.

The metal member 250 may be composed of the same material as the metal member 230 according to the first embodiment described above. The thickness of the metal member 250 can be the same as that of the metal member 230 according to the first embodiment and can be, for example, 5 µm or more and 2 mm or less, for example, 10 µm or more and 1 mm or less, or, for example, 50 µm or more and 0.5 mm or less.

Next, a method for bonding the main body member 12 and the reinforcing member 14 using the metal member 250 will be described. First, the metal member 250 is arranged between the main body member 12 and the reinforcing member 14. Next, the metal member 250 is pressurized between the main body member 12 and the reinforcing member 14. For example, by pressurizing the main body member 12 and the reinforcing member 14 using a mold corresponding to the shapes of the main body member 12 and the reinforcing member 14, the outer circumferential portion 20 and the bottom portion 34, which are bonding locations of the reinforcing member 14, can be effectively pressurized.

Subsequently, the metal member 250 is heated while being pressurized between the main body member 12 and the reinforcing member 14. For example, the metal member 250 can be heated using the extension portion 256 that protrudes from between the main body member 12 and the reinforcing member 14. The extension portion 256 may be heated by being irradiated with electromagnetic waves such as laser light or infrared light. The extension portion 256 may be subjected to resistance heating by connecting a power source thereto. The extension portion 256 may be subjected to induction heating by applying a magnetic field thereto. By heating the metal member 250 while pressurizing the metal member 250, softened resin enters the metal oxide particle clusters of the metal member 250, and the resin chemically bonds. As a result of this, the main body member 12 and the reinforcing member 14 are firmly bonded via the metal member 250.

When the metal member 250 does not include the extension portion 256, the outer circumferential bonding portion 252 and the inner bonding portion 254 may be directly heated. For example, the outer circumferential bonding portion 252 and the inner bonding portion 254 may be subjected to high-frequency induction heating by applying a magnetic field from outside the main body member 12 and the reinforcing member 14. In this case, the first connecting portion 258 and the second connecting portion 260 may be subjected to high-frequency induction heating, or the inner bonding portion 254 may be heated by heat transferred from the first connecting portion 258 and the second connecting portion 260.

After the main body member 12 and the reinforcing member 14 are bonded, the extension portion 256 protruding to the outside of the reinforcing member 14 can be removed by cutting. Note that the extension portion 256 does not have to be removed. On the other hand, the first connecting portion 258 and the second connecting portion 260 are in a state of remaining between the main body member 12 and the reinforcing member 14. The first connecting portion 258 and the second connecting portion 260 may or may not be bonded to the main body member 12 or the reinforcing member 14.

According to the present embodiment, the reinforcing member 14 may be formed only by a single plate-shaped member 16 so that the structure of the reinforcing member 14 is simplified as compared to the case where a honeycomb core is used. Further, the reinforcing member 14 may be formed by molding that uses the mold 62 such that the steps of manufacturing the reinforcing member 14 is simplified as compared to the case where a honeycomb core is used. The reinforcing member 14 includes the apex portion 28 in a lattice frame shape provided with beams extending in the longitudinal direction (for example, the x direction) and a direction orthogonal to the longitudinal direction (for example, the y direction) of the reinforcing member 14. It is therefore possible to address load changes in both the longitudinal direction and a direction that intersects the longitudinal direction. As a result, the reinforcing member 14 suitably suppresses deformation of the main body member 12.

According to the present embodiment, the reinforcing member 14 may be formed by reinforcement fibers continuous over the entire reinforcing member 14 so that the rigidity of the reinforcing member 14 is improved as compared to the case where an incision is provided in the middle of the reinforcement fiber. According to the present embodiment, the outer sloped portion 30 and the inner sloped portion 36 are configured to be gently curved so that misalignment of stitches of the prepreg tape comprised of continuous fibers is suppressed, and the rigidity of the entire reinforcing member 14 is improved.

According to the present embodiment, by bonding the main body member 12 and the reinforcing member 14 via the metal member 250, the bonding strength can be dramatically improved compared to a case where the metal member 250 is not used. Further, by using the thin metal member 250, an increase in weight due to the addition of the metal member 250 can be suppressed. As a result, a bonded structure 10, which is lightweight and excellent in rigidity can be provided.

According to the present embodiment, since the metal member 250 includes the first connecting portion 258 and the second connecting portion 260, the inner bonding portion 254 can be heated via the connecting portions. For example, it is difficult to heat the inner bonding portion 254 between the main body member 12 and the reinforcing member 14 through irradiation with electromagnetic waves from the outside if the main body member 12 and the reinforcing member 14 are made of carbon fiber reinforced plastic (CFRP) material since the carbon fibers are black. Further, since carbon fibers have electrical conductivity, when induction heating is performed by applying a magnetic field from the outside, the carbon fibers are heated, which may result in insufficient heating of the inner bonding portion 254. When the metal member 250 is heated from the outside, the outer surface side of the main body member 12 or the reinforcing member 14 is heated to a high temperature, which may cause deformation of the main body member 12 or the reinforcing member 14. According to the present embodiment, the inner bonding portion 254 can be sufficiently heated via the connecting portions; thus, the bonding strength between the main body member 12 and the reinforcing member 14 at the inner bonding portion 254 is improved, and the bonded structure 10 with better rigidity can be provided.

According to the present embodiment, by forming the first connecting portion 258 and the second connecting portion 260 as non-bonding portions, the main body member 12 or the reinforcing member 14 can be prevented from coming into contact with the connecting portions. This can suppress softening and deformation of the surfaces of the main body member 12 and the reinforcing member 14 at areas where bonding is unnecessary. Further, by providing the first connecting portion 258 and the second connecting portion 260, the inner bonding portion 254 can be properly positioned at a bonding site. In particular, by providing the connecting portions that are not bonded to the main body member 12 or the reinforcing member 14, the inner bonding portion 254 can be more properly positioned at the bonding site.

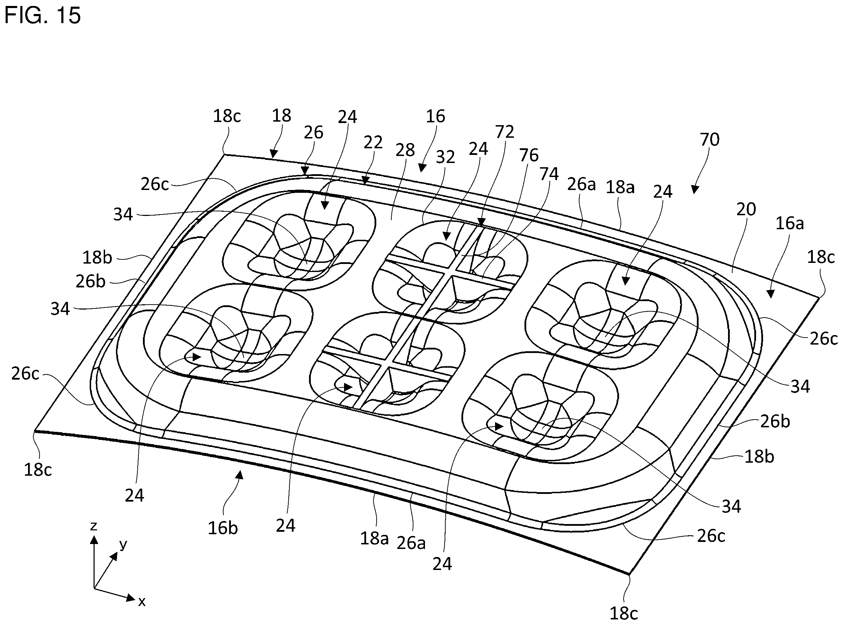

Fig. 15 is a perspective view schematically showing the configuration of a reinforcing member 70 according to an exemplary variation and shows a view of a first surface 16a of the reinforcing member 70. The reinforcing member 70 differs from the above-described embodiment in that it further includes a first rib 72 provided on the first surface 16a of the plate-shaped member 16. The plate-shaped member 16 is configured in the same manner as in the above-described embodiment.

The reinforcing member 70 includes the plate-shaped member 16 and the first rib 72. The first rib 72 is provided on the first surface 16a of the plate-shaped member 16 and extends in the thickness direction from the first surface 16a. The first rib 72 is provided inside at least one of the plurality of concave portions 24. In the example of Fig. 15, the first rib 72 is provided inside the central concave portion 24 in the longitudinal direction (for example, the x direction). It should be noted that the first rib 72 may be provided inside any two or more of the plurality of concave portions 24 or may be provided inside all of the plurality of concave portions 24. The upper surface of the first rib 72 is configured to be flush with, for example, the apex portion 28.

The first rib 72 includes a first transverse rib 74 extending in the longitudinal direction (for example, the x direction) and a first longitudinal rib 76 extending in a direction that intersects the longitudinal direction (for example, the y direction). The ends of the first transverse rib 74 are connected to the outer edge 32 of the concave portion 24. The ends of the first longitudinal rib 76 are connected to the outer edge 32 of the concave portion 24. The first transverse rib 74 and the first longitudinal rib 76 intersect and are connected at the position of the bottom portion 34 of the concave portion 24. The first rib 72 may further include a first oblique rib (not shown) extending in an oblique direction (for example, the ±45-degree directions) with respect to the first transverse rib 74 or the first longitudinal rib 76. The first rib 72 may include any one or more ribs selected from the group consisting of the first transverse rib 74, the first longitudinal rib 76, and the first oblique rib.

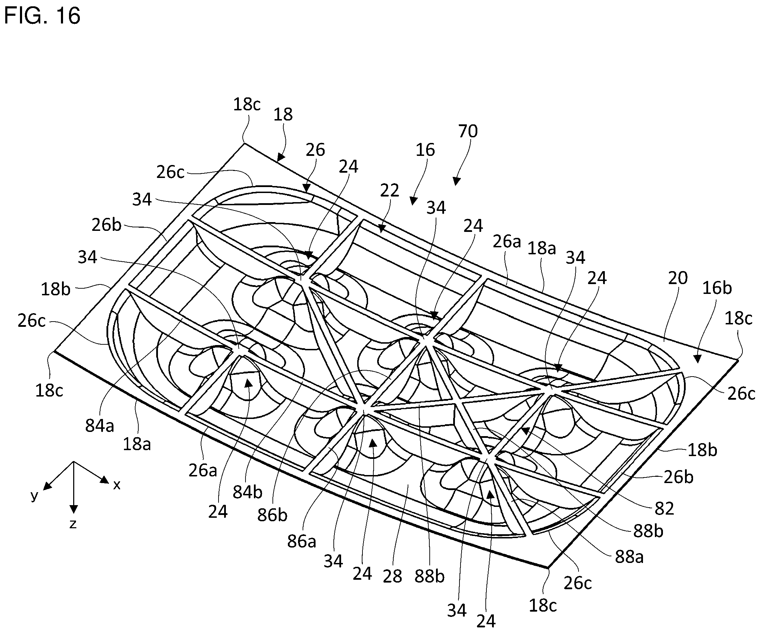

Fig. 16 is a perspective view schematically showing the configuration of the reinforcing member 70 according to the variation and shows a view of the second surface 16b of the reinforcing member 70. The reinforcing member 70 further includes a second rib 82 provided on the second surface 16b of the plate-shaped member 16. The lower surface of the second rib 82 is configured to be flush with the bottom portion 34 of each of the outer circumferential portion 20 and the plurality of concave portions 24. The lower surface of the second rib 82 is, for example, configured to be located on a virtual plane B shown in Fig. 7.

The second rib 82 is provided on the second surface 16b of the plate-shaped member 16 and extends in the thickness direction from the second surface 16b. The second rib 82 is provided inside the convex portion 22. The second rib 82 includes second transverse ribs 84a and 84b extending in the longitudinal direction (for example, the x direction), second longitudinal ribs 86a and 86b extending in a direction that intersects the longitudinal direction (for example, the y direction), and second oblique ribs 88a and 88b extending in oblique directions (for example, the ±45-degree directions).

The second transverse ribs 84a and 84b include a second outer transverse rib 84a connecting between the outer circumferential portion 20 and the bottom portion 34 and a second inner transverse rib 84b connecting between two bottom portions 34. The second longitudinal ribs 86a and 86b include a second outer longitudinal rib 86a connecting between the outer circumferential portion 20 and the bottom portion 34 and a second inner longitudinal rib 86b connecting between two bottom portions 34. The second oblique ribs 88a and 88b include a second outer oblique rib 88a connecting between the outer circumferential portion 20 and the bottom portion 34 and a second inner oblique rib 88b connecting between two bottom portions 34. The second rib 82 may include any one or more ribs selected from the group consisting of the second outer transverse rib 84a, the second inner transverse rib 84b, the second outer longitudinal rib 86a, the second inner longitudinal rib 86b, the second outer oblique rib 88a, and the second inner oblique rib 88b.

The first rib 72 and the second rib 82 are made of a fiber-reinforced resin. The first rib 72 and the second rib 82 may be made of a thermoplastic fiber-reinforced resin or a thermosetting fiber-reinforced resin similar to that of the plate-shaped member 16 or may be made of a thermoplastic fiber-reinforced resin or a thermosetting fiber-reinforced resin of a material different from that of the plate-shaped member 16. Carbon fiber, glass fiber, or aramid fiber may be used as the reinforcement fiber constituting the first rib 72 and the second rib 82. Engineering plastics such as a thermoplastic resin like PEEK or PEKK or a thermosetting resin such as an epoxy resin may be used as the resin constituting the first rib 72 and the second rib 82. The first rib 72 and the second rib 82 may be made of, for example, a reinforcement fiber that is not continuous with the reinforcement fiber constituting the plate-shaped member 16.

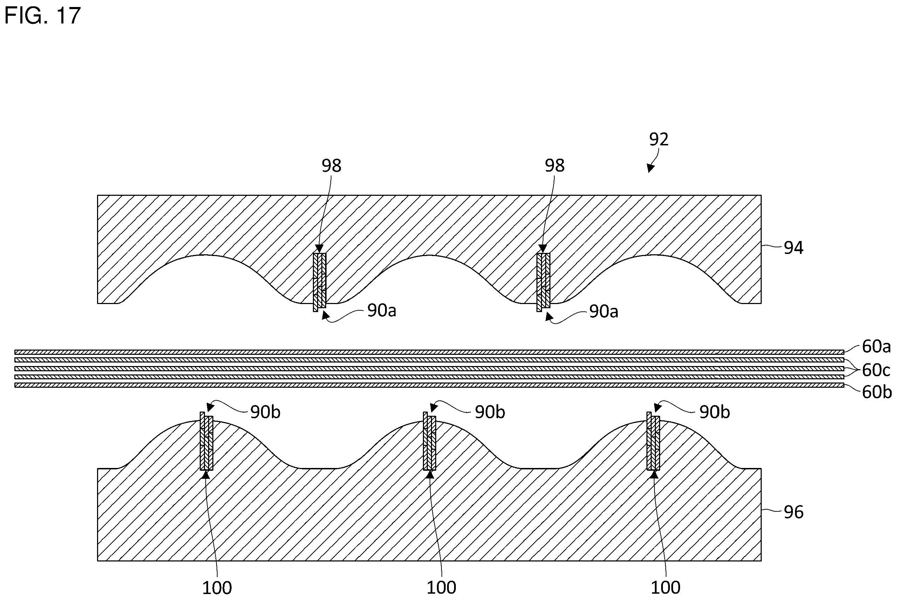

Fig. 17 schematically shows a method of molding the reinforcing member 70 according to the exemplary variation. The mold 92 for forming the reinforcing member 70 of the exemplary variation differs from the mold 62 according to the above-described embodiment in that the mold 92 includes groove portions 98 and 100 for forming the first rib 72 and the second rib 82. The upper mold 94 has a concave-convex shape corresponding to the first surface 16a of the plate-shaped member 16 and has the first groove portion 98 for forming the first rib 72. The lower mold 96 has a concave-convex shape corresponding to the second surface 16b of the plate-shaped member 16 and has the second groove portion 100 for forming the second rib 82.

The first groove portion 98 is filled with a prepreg 90a, and the second groove portion 100 is filled with a prepreg 90b. The prepregs 90a and 90b filling the groove portions 98 and 100 are, for example, chopped material produced by cutting the prepreg tape 50 or the prepreg sheet 60. The size (width and length) of the prepregs 90a and 90b does not particularly matter. The width of the prepregs 90a and 90b is 1 mm or more and 20 mm or less and is, for example, 2 mm or more and 10 mm or less. The length of the prepregs 90a and 90b is 5 mm or more and 50 mm or less and is, for example, 10 mm or more and 30 mm or less.

The plurality of prepreg sheets 60a, 60b, and 60c are stacked and arranged between the upper mold 94, in which the first groove portion 98 is filled with the prepreg 90a, and the lower mold 96, in which the second groove portion 100 is filled with the prepreg 90b. The plurality of prepreg sheets 60a, 60b, and 60c are the same as those in the embodiment described above.

By heating and pressurizing the plurality of prepreg sheets 60a-60c and the prepregs 90a and 90b between the upper mold 94 and the lower mold 96 shown in Fig. 17, the reinforcing member 70 in which the first rib 72 and the second rib 82 are formed on the plate-shaped member 16 is molded. The plurality of prepreg sheets 60a-60c and the prepregs 90a and 90b are heated by the upper mold 94 and the lower mold 96 equipped with a heater to a temperature equal to or higher than the melting point of the thermoplastic resin 54. The plurality of prepreg sheets 60a-60c and the prepregs 90a and 90b are integrated by heating and pressurization by the mold 92 and are molded into the reinforcing member 70. Thereafter, the reinforcing member 70 is completed by removing the mold 92.

According to this variation, the first rib 72 is formed on the first surface 16a of the plate-shaped member 16, and the second rib 82 is formed on the second surface 16b of the plate-shaped member 16 such that the rigidity of the reinforcing member 70 is improved further.

The reinforcing member 70 according to the present exemplary variation can be used by being bonded to the main body member 12. For example, in addition to the outer circumferential portion 20 and the bottom portion 34 of the reinforcing member 70, the lower surface of the second rib 82 can be bonded to the back surface 12b of the main body member 12. The reinforcing member 70 can be bonded to the main body member 12 in the same manner as in the above-described embodiment. The metal member 250 can further include an inner bonding portion for bonding to the second rib 82. The bonded structure 10 can include the main body member 12, the reinforcing member 70 according to the present exemplary variation, and the metal member 250.

In a further exemplary variation, the reinforcing member 70 may include only one of the first rib 72 and the second rib 82. The reinforcing member 70 may include only the first rib 72 and may not include the second rib 82. The reinforcing member 70 may include only the second rib 82 and may not include the first rib 72.

### (Third embodiment)

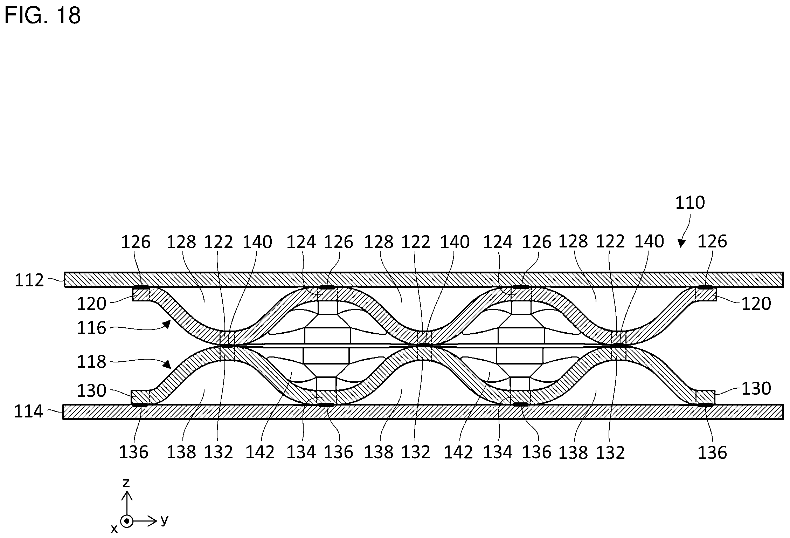

Fig. 18 is a lateral cross-sectional view schematically showing the configuration of a bonded structure 110 according to the third embodiment. The bonded structure 110 according to the present embodiment has a so-called sandwich panel structure. The bonded structure 110 includes a first main body member 112, a second main body member 114, a first reinforcing member 116, and a second reinforcing member 118.

The first main body member 112 and the second main body member 114 are members corresponding to the skin of a sandwich panel. Each of the first main body member 112 and the second main body member 114 can be configured in the same manner as the main body member 12 according to the above-described embodiment. The first reinforcing member 116 and the second reinforcing member 118 are members corresponding to the core of a sandwich panel. Each of the first reinforcing member 116 and the second reinforcing member 118 can be configured in the same manner as the reinforcing member 14 according to the above-described embodiment or the reinforcing member 70 according to the exemplary variation.

The first reinforcing member 116 includes a first outer circumferential portion 120, a first apex portion 122, and a plurality of first bottom portions 124. The first reinforcing member 116 is bonded to the first main body member 112 via a plurality of first bonding portions 126. The first main body member 112 is bonded to the first outer circumferential portion 120 and the plurality of first bottom portions 124 via the plurality of first bonding portions 126. A first cavity 128 is provided between the first main body member 112 and the first reinforcing member 116.

The second reinforcing member 118 includes a second outer circumferential portion 130, a second apex portion 132, and a plurality of second bottom portions 134. The second reinforcing member 118 is bonded to the second main body member 114 via a plurality of second bonding portions 136. The second main body member 114 is bonded to the second outer circumferential portion 130 and a plurality of second bottom portions 134 via the plurality of second bonding portions 136. A second cavity 138 is provided between the second main body member 114 and the second reinforcing member 118.

The first reinforcing member 116 is bonded to the second reinforcing member 118 via a third bonding portion 140. The third bonding portion 140 is provided between the first apex portion 122 and the second apex portion 132. A third cavity 142 is provided between the first reinforcing member 116 and the second reinforcing member 118.

Each of the first bonding portion 126, the second bonding portion 136, and the third bonding portion 140 can be configured in the same manner as the bonding portion 44 according to the above-described second embodiment. For example, it is possible to prepare first, second, and third metal members on both surfaces of which metal oxide particle clusters are formed, to bond the first main body member 112 and the first reinforcing member 116 with the first metal member, to bond the second main body member 114 and the second reinforcing member 118 with the second metal member, and to bond the first reinforcing member 116 and the second reinforcing member 118 with the third metal member.

According to the present embodiment, a sandwich panel structure can be realized by combining four plate-shaped members. According to the present embodiment, the structure of the bonded structure 110 can be simplified and the steps of manufacturing the bonded structure 110 can be simplified as compared to the case where a honeycomb core is used.

The present invention has been described based on the embodiments. It will be understood by those skilled in the art that the present invention is not limited to the above-described embodiments, that various design changes are possible, that various modifications are possible, and that such modifications are also within the scope of the present invention.

Several aspects of the present invention will be described.

The first aspect of the present invention relates to a reinforcing member including a plate-shaped member that is made of a fiber-reinforced resin in which a continuous fiber is used as a reinforcement fiber and that has a first surface and a second surface, the plate-shaped member including: an outer circumferential portion that defines an outer edge of the plate-shaped member; a convex portion that is convex on a side of the first surface in an area inside the outer circumferential portion; and a plurality of concave portions that are concave on the side of the first surface in an area inside the convex portion. According to the first aspect, the concave-convex structure, in which a convex portion is provided inside the outer circumferential portion and a plurality of concave portions are provided inside the convex portion, can suitably suppress deformation such as flexing in the presence of a load in both the longitudinal direction of the reinforcing member and a direction orthogonal to the longitudinal direction. Further, the plate-shaped member can be made of a fiber-reinforced resin in which a continuous fiber is used as a reinforcement fiber, and a lightweight and highly rigid reinforcing member can be realized by structuring the plate-shaped member to have concavities and convexities.

The second aspect of the present invention relates to a reinforcing member according to the first aspect, wherein the plurality of concave portions are arranged in a lattice shape or a radial shape. According to the second aspect, the lattice or radial arrangement of the plurality of concave portions can suitably suppress deformation in the presence of a load in the direction in which the plurality of concave portions are arranged.

The third aspect of the present invention relates to the reinforcing member according to the first or second aspect, wherein an outer edge of the convex portion has a shape in which four corners of a quadrangle are arc-shaped, and wherein an outer edge of each of the plurality of concave portions has a shape in which four corners of a quadrangle are arc-shaped. According to the third aspect, deformation in the presence of a load in the direction along the side of the quadrangle can be suitably suppressed by approximating the outer edge of the convex portion and of each of the plurality of concave portions to a quadrangle. Further, the arc-shape of the four corners of the outer edge of the convex portion and of the plurality of concave portions makes it easy to provide the continuous fiber uniformly along the surface of the convex portion and of the plurality of concave portions and to improve the rigidity of the reinforcing member as a whole.

The fourth aspect of the present invention relates to the reinforcing member according to the third aspect, wherein a bottom portion of each of the plurality of concave portions has a shape of a quadrangle or a shape produced by rounding four corners of a quadrangle. According to the fourth aspect, deformation in the presence of a load in the direction along the side of the quadrangle is suitably suppressed by approximating the bottom portion of each of the plurality of concave portions to a quadrangle.

The fifth aspect of the present invention relates to the reinforcing member according to any one of the first to fourth aspects, wherein a radius of curvature of the first surface and the second surface of the plate-shaped member in a cross-sectional view orthogonal to the outer edge is configured to be 20 mm or more. According to the fifth aspect, the radius of curvature of 20 mm or more of the first surface and the second surface makes it easy to provide the continuous fiber uniformly along the first surface and the second surface and to improve the rigidity of the reinforcing member as a whole.

The sixth aspect of the present invention relates to the reinforcing member according to any one of the first to fifth aspects, including a continuous fiber sheet formed by weaving a plurality of continuous fibers extending in a first direction and a plurality of continuous fibers extending in a second direction that intersects the first direction. According to the sixth aspect, deformation such as flexing in the presence of a load in both the longitudinal direction of the reinforcing member and a direction orthogonal to the longitudinal direction is suitably suppressed by using a continuous fiber sheet formed by weaving a plurality of continuous fibers extending in the first direction and the second direction that intersect each other.

The seventh aspect of the present invention relates to the reinforcing member according to any one of the first to sixth aspects, further including a rib made of a fiber-reinforced resin and extending from the first surface or the second surface. According to the seventh aspect, provision of the rib on the first surface or the second surface of the plate-shaped member can improve the rigidity of the reinforcing member further.

The eighth aspect of the present invention relates to the reinforcing member according to the seventh aspect, wherein the rib includes a first rib that extends from the first surface in an area inside at least one of the plurality of concave portions. According to the eighth aspect, provision of the first rib inside the concave portion can suppress deformation of the concave portion more suitably and improve the rigidity of the reinforcing member further.

The ninth aspect of the present invention relates to the reinforcing member according to the seventh or eighth aspect, wherein the rib further includes a second rib that extends from the second surface in an area inside the convex portion. According to the ninth aspect, provision of the second rib inside the convex portion can suppress deformation of the convex portion more suitably and improve the rigidity of the reinforcing member further.

The tenth aspect of the present invention relates to the reinforcing member according to the ninth aspect, wherein the second rib connects between a bottom portion of at least one of the plurality of concave portions and the outer circumferential portion. According to the tenth aspect, provision of the second rib that connects between the bottom portion and the outer circumferential portion can suppress deformation of the bottom portion with respect to the outer circumferential portion more suitably and improve the rigidity of the reinforcing member further.

The eleventh aspect of the present invention relates to the reinforcing member according to the ninth or tenth aspect, wherein the second rib connects between bottom portions of two of the plurality of concave portions. According to the eleventh aspect, provision of the second rib that connects between the two bottom portions can suppress deformation of the bottom portion more suitably and improve the rigidity of the reinforcing member further.

The twelfth aspect of the present invention relates to the reinforcing member according to any one of the first to eleventh aspects, wherein a resin weight content of the fiber-reinforced resin is 50% or less. According to the twelfth aspect, the resin weight content of the fiber-reinforced resin of 50% or less can improve the rigidity of the reinforcing member further.

The thirteenth aspect of the present invention relates to a bonded structure including: the reinforcing member according to any one of the first to twelfth aspects; and a main body member to be bonded to the outer circumferential portion of the reinforcing member and to a bottom portion of each of the plurality of concave portions, wherein a cavity is provided between the reinforcing member and the main body member. According to the thirteenth aspect, it is possible to suppress deformation of the main body member by using the reinforcing member and to provide a rigid bonded structure, by bonding the reinforcing member to the main body member. Further, the cavity is provided between the reinforcing member and the main body member such that it is possible to provide a lightweight and highly rigid bonded structure.

The fourteenth aspect of the present invention relates to a manufacturing method including: providing a prepreg sheet, produced by impregnating a continuous fiber with a resin, on a mold for molding a plate-shaped member, the plate-shaped member including an outer circumferential portion that defines an outer circumference of the plate-shaped member having a first surface and a second surface, a convex portion that is convex on the side of the first surface in an area inside the outer circumferential portion, and a plurality of concave portions that are concave on the side of the first surface in an area inside the convex portion; and heating and pressurizing the prepreg sheet by using the mold to mold the plate-shaped member made of a fiber-reinforced resin. According to the fourteenth aspect, the reinforcing member may be manufactured by molding the prepreg sheet by using a mold so that the steps of manufacturing the reinforcing member is simplified. Further, as compared with the case where the where the prepreg cut into small pieces is used, the work of providing the prepreg can be simplified, and the rigidity of the molded reinforcing member can be improved by using the prepreg sheet produced by impregnating the continuous fiber with a resin.

The fifteenth aspect of the present invention relates to the manufacturing method according to the fourteenth aspect, wherein the prepreg sheet is formed by weaving a plurality of first prepreg tapes extending in a first direction and a plurality of second prepreg tapes extending in a second direction that intersects the first direction, and wherein each of the plurality of first prepreg tapes and the plurality of second prepreg tapes is formed by impregnating a plurality of continuous fibers extending in one direction with the resin. According to the fifteenth aspect, the gap between prepreg tapes is variable at the time of molding according to the concave-convex shape of the mold such that it is easy to provide the prepreg tape more uniformly along the concave-convex shape of the mold. As a result, the reinforcing member in which the prepreg tape is uniformly provided can be molded, and the rigidity of the reinforcing member can be improved.

The sixteenth aspect of the present invention relates to the manufacturing method according to the fourteenth aspect, wherein the prepreg sheet is formed by weaving a plurality of first prepreg tapes extending in a first direction and a plurality of second prepreg tapes extending in a second direction that intersects the first direction, and wherein each of the plurality of first prepreg tapes and the plurality of second prepreg tapes is formed by impregnating a plurality of continuous fibers extending in one direction with the resin. According to the sixteenth aspect, the rigidity of the molded reinforcing member can be improved by using the continuous fiber sheet formed by weaving a plurality of continuous fibers extending in the first direction and the second direction that intersect each other.

The seventeenth aspect of the present invention relates to the manufacturing method according to any one of the fourteenth to sixteenth aspects, wherein the mold includes a groove for forming a rib extending from the first surface or the second surface, the method further comprising filling the groove in the mold with a prepreg, wherein the prepreg sheet and the prepreg are heated and pressurized by using the mold to mold the reinforcing member in which the rib made of a fiber-reinforced resin is bonded to the first surface or the second surface of the plate-shaped member. According to the seventeenth aspect, the rib may be formed in the reinforcing member such that the rigidity of the molded reinforcing member can be improved further. By filling the groove in the mold with the prepreg, the reinforcing member in which the plate-shaped member and the rib are integrated can be manufactured easily.

The eighteenth aspect of the present invention relates to the manufacturing method according to any one of the fourteenth to seventeenth aspects, further including: bonding the outer circumferential portion of the reinforcing member and a bottom portion of each of the plurality of concave portions to a surface of the main body member to form a bonded structure. According to the eighteenth aspect, a lightweight and highly rigid bonded structure can be manufactured easily by bonding the reinforcing member on the surface of the main body member.

The nineteenth aspect of the present invention relates to a bonding method including: arranging a metal member between a first member containing a thermoplastic first resin and a second member containing a thermoplastic second resin, the metal member having a first surface on which a first metal oxide particle cluster is formed and a second surface on which a second metal oxide particle cluster is formed and having a thickness of 1 mm or less from the first surface to the second surface; and heating and pressurizing the metal member between the first member and the second member so as to bond the first surface to the first resin and bond the second surface to the second resin. According to the nineteenth aspect, by using a metal member on which a metal oxide particle cluster is formed, the thermoplastic resin and the metal member can be firmly bonded to each other, thus improving the bonding strength between the first member and the second member. Furthermore, by setting the thickness of the metal member to 1 mm or less, an increase in weight due to the addition of the metal member can be suppressed, and a bonded structure that is lightweight and excellent in rigidity can be provided.

The twentieth aspect of the present invention relates to the bonding method described in the nineteenth aspect, wherein the metal member is heated by at least one of: irradiating the metal member with electromagnetic waves; passing a current through the metal member; and applying a magnetic field to the metal member. According to the twentieth aspect, heating the metal member allows bonding by heating and softening only the vicinity of the surfaces of the first and second members that are in contact with the metal member. This allows the deformation of the first member and the second member due to heating to be suppressed, thereby improving the quality of the bonded structure.

The twenty-first aspect of the present invention relates to the bonding method according to the nineteenth or twentieth aspect, wherein the metal member includes a bonding portion located between the first member and the second member and an extension portion extending from between the first member and the second member, and wherein the metal member is heated by at least one of: irradiating the extension portion with electromagnetic waves; passing a current through the extension portion; and applying a magnetic field to the extension portion. According to the twenty-first aspect, by providing the extension portion protruding from between the first member and the second member, the metal member sandwiched between the first member and the second member can be effectively heated.

The twenty-second aspect relates to the bonding method according to the twenty-first aspect, further including removing the extension portion after bonding the bonding portion to the first member and the second member. According to the twenty-second aspect, removing the extension portion that does not contribute to the bonding allows a lighter bonded structure to be provided.

The twenty-third aspect of the present invention relates to the bonding method described in any one of the nineteenth to twenty-second aspects, further including preheating the metal member before arranging the metal member between the first member and the second member. According to the twenty-third aspect, preheating the metal member can shorten the heating process after sandwiching the metal member between the first member and the second member, thereby improving productivity.

The twenty-fourth aspect of the present invention relates to the bonding method described in any one of the nineteenth to twenty-third aspects, wherein at least one of the first member and the second member is made of a fiber-reinforced resin containing a reinforcement fiber extending in a direction along the first surface or the second surface. According to the twenty-fourth aspect, using a fiber-reinforced resin allows a lightweight and highly rigid bonded structure to be provided.

The twenty-fifth aspect of the present invention relates to the bonding method described in the twenty-fourth aspect, wherein the reinforcement fiber includes carbon fiber, glass fiber, or aramid fiber. According to the twenty-fifth aspect, using carbon fiber, glass fiber, or aramid fiber as the reinforcement fiber allows a lightweight and highly rigid bonded structure to be provided.

The twenty-sixth aspect of the present invention relates to the bonding method described in any one of the nineteenth to twenty-fifth aspects, wherein at least one of the first resin and the second resin is polyaryletherketone (PAEK), polyetheretherketone (PEEK), polyetherketoneketone (PEKK), polyphenylene sulfide (PPS), polyetherimide (PEI), or polyethersulfone (PES). According to the twenty-sixth aspect, using an engineering plastic as the first resin or the second resin allows a lightweight and highly rigid bonded structure to be provided.

The twenty-seventh aspect relates to the bonding method described in any one of the nineteenth to twenty-sixth aspects, wherein the metal member includes a steel material, an aluminum material, an aluminum alloy material, a titanium material, a titanium alloy material, a nickel-titanium alloy material, a copper material, or a copper alloy material. According to the twenty-seventh aspect, using these metal materials allows for an increase in the bonding strength between the metal oxide particle clusters and the resin.

The twenty-eighth aspect of the present invention relates to the bonding method described in any one of nineteenth to twenty-seventh aspects, wherein the metal member includes an outer circumferential bonding portion to be bonded to an outer circumferential portion of the second member, an inner bonding portion to be bonded to a portion of the second member spaced apart from the outer circumferential portion of the second member, and a connecting portion that connects the outer circumferential bonding portion and the inner bonding portion. According to the twenty-eighth aspect, by providing a connecting portion that connects the outer circumferential bonding portion and the inner bonding portion of the metal member, the inner bonding portion can be properly heated, and the bonding strength at the inner bonding portion can be improved.

The twenty-ninth aspect of the present invention relates to the bonding method described in the twenty-eighth aspect, wherein the connecting portion is not bonded to the first member or the second member. According to the twenty-ninth aspect, it is possible to suppress the occurrence of deformation caused by heating in the first member or the second member due to contact of the connecting portion with the first member or the second member at an area where bonding is unnecessary. Further, by providing a connecting portion that is not bonded to the first member or the second member, the inner bonding portion can be properly positioned at the bonding site.

The thirtieth aspect of the present invention relates to a bonded structure including: a first member containing a thermoplastic first resin; a second member containing a thermoplastic second resin; and a metal member having a first surface on which a first metal oxide particle cluster to be bonded to the first resin of the first member is formed and a second surface on which a second metal oxide particle cluster to be bonded to the second resin of the second member is formed and having a thickness of 5 µm or more and 1 mm or less from the first surface to the second surface. According to the thirtieth aspect, by using a metal member on which a metal oxide particle cluster is formed, bonding to the thermoplastic resin can be firmly achieved, thus improving the bonding strength between the first member and the second member. Further, by setting the thickness of the metal member to 1 mm or less, an increase in weight due to the addition of the metal member can be suppressed, and a bonded structure that is lightweight and excellent in rigidity can be provided.

### INDUSTRIAL APPLICABILITY

According to one embodiment of the present invention, a lightweight and highly rigid bonded structure can be provided.

### REFERENCE SIGNS LIST

10, 110, 200 bonded structure, 12 main body member, 14 reinforcing member, 16 plate-shaped member, 16a first surface, 16b second surface, 18 outer edge, 20 outer circumferential portion, 22 convex portion, 24 concave portion, 26 outer edge, 28 apex portion, 30 outer sloped portion, 32 outer edge, 34 bottom portion, 36 inner sloped portion, 50 prepreg tape, 52 reinforcement fiber, 54 thermoplastic resin, 56 first prepreg tape, 58 second prepreg tape, 60 prepreg sheet, 210 first member, 220 second member, 230, 250 metal member, 232 first surface, 234 second surface, 236 first metal oxide particle cluster, 238 second metal oxide particle cluster, 240 bonding portion, 242 first extension portion, 244 second extension portion, 252 outer circumferential bonding portion, 254 inner bonding portion, 256 extension portion, 258 first connecting portion, 260 second connecting portion

## Claims

1. A bonding method comprising:
arranging a metal member between a first member containing a thermoplastic first resin and a second member containing a thermoplastic second resin, the metal member having a first surface on which a first metal oxide particle cluster is formed and a second surface on which a second metal oxide particle cluster is formed and having a thickness of 1 mm or less from the first surface to the second surface; and
heating and pressurizing the metal member between the first member and the second member so as to bond the first surface to the first resin and bond the second surface to the second resin.

2. The bonding method according to Claim 1, wherein the metal member is heated by at least one of: irradiating the metal member with electromagnetic waves; passing a current through the metal member; and applying a magnetic field to the metal member.

3. The bonding method according to Claim 1,
wherein the metal member includes a bonding portion located between the first member and the second member and an extension portion extending from between the first member and the second member, and
wherein the metal member is heated by at least one of: irradiating the extension portion with electromagnetic waves; passing a current through the extension portion; and applying a magnetic field to the extension portion.

4. The bonding method according to Claim 3, further comprising removing the extension portion after bonding the bonding portion to the first member and the second member.

5. The bonding method according to any one of Claims 1 through 4, further comprising preheating the metal member before arranging the metal member between the first member and the second member.

6. The bonding method according to any one of Claims 1 through 5, wherein at least one of the first member and the second member is made of a fiber-reinforced resin containing a reinforcement fiber extending in a direction along the first surface or the second surface.

7. The bonding method according to Claim 6, wherein the reinforcement fiber includes carbon fiber, glass fiber, or aramid fiber.

8. The bonding method according to any one of Claims 1 through 7, wherein at least one of the first resin and the second resin is polyaryletherketone (PAEK), polyetheretherketone (PEEK), polyetherketoneketone (PEKK), polyphenylene sulfide (PPS), polyetherimide (PEI), or polyethersulfone (PES).

9. The bonding method according to any one of Claims 1 through 8, wherein the metal member includes a steel material, an aluminum material, an aluminum alloy material, a titanium material, a titanium alloy material, a nickel-titanium alloy material, a copper material, or a copper alloy material.

10. The bonding method according to any one of Claims 1 through 9, wherein the metal member includes an outer circumferential bonding portion to be bonded to an outer circumferential portion of the second member, an inner bonding portion to be bonded to a portion of the second member spaced apart from the outer circumferential portion of the second member, and a connecting portion that connects the outer circumferential bonding portion and the inner bonding portion.

11. The bonding method according to Claim 10, wherein the connecting portion is not bonded to the first member or the second member.

12. A bonded structure comprising:
a first member containing a thermoplastic first resin;
a second member containing a thermoplastic second resin; and
a metal member having a first surface on which a first metal oxide particle cluster to be bonded to the first resin of the first member is formed and a second surface on which a second metal oxide particle cluster to be bonded to the second resin of the second member is formed and having a thickness of 5 µm or more and 1 mm or less from the first surface to the second surface.
